# EUROPEAN PATENT SPECIFICATION

(11) **EP 1 548 859 B1**
(45) Date of publication and mention of the grant of the patent: **13.06.2007**
(21) Application number: 05006747.9
(22) Date of filing: 14.07.2000
(51) Int. Cl.: H01M 2/10

(54) **Battery pack and method for constructing same**
Batteriepack und Verfahren zu dessen Herstellung
Module de batterie et son procédé de fabrication

(30) Priority: 15.07.1999 US 144018 P
(43) Date of publication of application: 29.06.2005
(62) Divisional of application: 00306010.0
(73) Proprietor: Black & Decker Inc., Newark, Delaware 19711 (US)
(72) Inventor: Zemlock, Michael A., Towson, Maryland 21286 (US); Agan, Kevin S., Fallston Maryland 21047 (US); Grossmann, Horst, 65597 Huenfelden-Kirberg (DE); Bradus, Robert, Bel Air Maryland 21015 (US)
(74) Representative: Bell, Ian Stephen

(56) References cited:
- EP-A- 0 849 818
- WO-A-99/19918
- US-A- 3 219 485
- US-A- 4 806 440
- US-A- 5 096 788

## Description

This invention relates generally to battery packs and, more particularly, to battery packs for cordless power tools.

Cordless products which use rechargeable batteries are prevalent throughout the workplace as well as in the home. From housewares to power tools, rechargeable batteries are used in numerous devices. Ordinarily, nickel-cadmium or nickel-metal hydride battery cells are used in these devices. Since the devices use a plurality of battery cells, the battery cells are ordinarily packaged as battery packs. These battery packs couple with the cordless devices and secure to the device. The battery pack may be removed from the cordless device and charged in a battery charger or charged in the cordless device itself.

Because multiple cells are typically used in a battery pack, it may be difficult to assemble the battery pack. It is therefore an object of this invention to provide a battery pack that is easy to assemble.

US5096788 describes a battery pack having a plurality of cells, an insulator and shock pads for protecting the cells.

EP0849818 describes an electrochemical cell with a spirally wound electrode and honeycomb insulator pads.

WO99/19918 describes a battery pack having a plurality of cells, resilient rubber pads, paper insulators and a cardboard support pad.

US3219485 describes a battery pack having a casing containing a plurality of batteries. A soft insulating pad of fibreglass is disposed in the casing.

According to an aspect of the present invention, there is provided a battery pack comprising:
a first cell having top and bottom terminals,
a first support disposed on the top terminal; and
a second support disposed on the bottom terminal, characterised in that the battery pack further comprises an absorptive pad for absorbing electrolyte disposed on at least one of the top and bottom terminals.

According to another aspect of the present invention, there is provided a method for manufacturing a battery pack, comprising:
providing first and second supports and first and second cells, the first and second cells having top and bottom terminals; and
disposing the first and second cells between the first and second supports, each top and bottom terminals of the first and second cells contacting one of the first and second supports, characterised in that the method further comprises the step of providing an absorptive pad for absorbing electrolyte between one of the top and bottom terminals of the first cell and one of the first and second supports.

In accordance with the present invention, an improved battery pack is employed. The battery pack includes a first cell having top and bottom terminals, a first support disposed on the top terminal, and a second support disposed on the bottom terminal.

At least one of the first and second supports may include a rib for maintaining the first cell in place. The rib may extend along a longitudinal axis of the first cell and/or extend substantially perpendicularly from the at least one of the first and second supports. The first and second supports may lock together. Accordingly, the first support may include a first protrusion, and the second support may include a second protrusion which engages the first protrusion. The battery pack may also include a pad disposed on at least one of the top and bottom terminals. The pad may be substantially circular. The battery pack may also include a second cell disposed between the first and second supports. The second cell may be disposed adjacent and/or separate to the first cell. The battery pack may also include a lead plate connecting the first and second cells. The lead plate may connect the first and second cells through one of the first and second supports. At least one of the first and second supports may have a hole for allowing a fluid to flow therethrough. The battery pack may also include a housing supporting the first cell and the first and second supports.

Additional features and benefits of the present invention are described, and will be apparent from, the accompanying drawings and the detailed description below.

The accompanying drawings illustrate preferred embodiments of the invention according to the practical application of the principles thereof, and in which:
FIG. 1 is an exploded perspective view of a packet;
FIG. 2 is a partial exploded perspective view of a battery pack;
FIG. 3 is a cross-sectional side view of a battery pack; and
FIG. 4 is a schematic diagram of the battery pack.

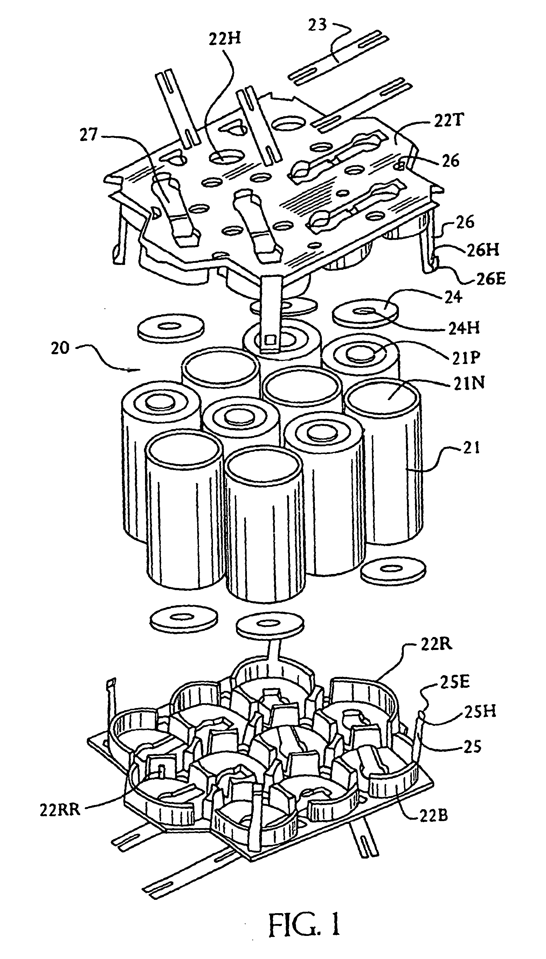

The invention is now described with reference to the accompanying figures, wherein like numerals designate like parts. Referring to FIGS. 1-4, a battery pack 10 of the present invention is connected to a power tool 100, such as a drill, a miter saw, a circular saw, etc. Power tool 100 may have a tool 103, such as a blade, cutting tool or bit, a motor 101 for driving tool 103, and a switch 102 for switching motor 101. Motor 101 may be electrically connected to battery pack 10.

Battery pack 10 preferably includes four battery terminals. The first battery terminal POS is the positive terminal for battery pack 10. The second battery terminal NEG is the negative/common terminal. The third battery terminal TEMP is the temperature terminal. The fourth battery terminal ID is the identification terminal. Battery terminals POS and NEG receive the charging current sent from a charger (not shown) for charging the battery pack 10.

Battery cells 21 are coupled between the battery terminals POS and NEG. In addition, preferably coupled between battery terminals TEMP and NEG is a temperature sensing device, such as a negative temperature co-efficient (NTC) resistor, or thermistor, R_{T}. The temperature sensing device R_{T} is preferably in close physical proximity to the cells 21 for monitoring of the battery temperature. Persons skilled in the art will recognize that other components, such as capacitors, etc., or circuits can be used to provide a signal representative of the battery temperature.

A battery identification device may be connected to the ID terminal to provide battery identification information to the charger 21. Preferably, the battery identification device 17 is a resistor R_{ID} connected between the ID terminal and the negative terminal NEG. The value of resistor R_{ID} is preferably selected to indicate the type and capacity of battery pack 10. Because of the resistance of resistor R_{ID}, the charger can recognize the type and/or capacity of battery pack 10 and modify any and/or all charging parameters, such as charging voltage, current and time, in order to minimize charging time and/or avoid overcharging. For further information on battery pack 10 and the interaction with the charger, persons skilled in the art are referred to US Application No. 09/292164, filed on April 15, 1999, entitled "Method and Apparatus for Charging Batteries," which is hereby incorporated by reference in whole.

Preferably, the battery pack 10 comprises at least one packet 20, as shown in FIGS. 1-3. Packet 20 may comprise at least one cell 21, and preferably a plurality of cells 21. Each cell 21 has a positive terminal 21 P and a negative terminal 21 N.

Top and bottom supports 22T, 22B may hold the cells 21 therebetween. Supports 22T, 22B may be substantially planar and/or substantially perpendicular to the longitudinal axis of cells 21. Preferably, the supports 22T, 22B have ribs 22R for holding the cells 21 in place and/or for holding the cells 21 apart from each other, as discussed below.

Supports 22T, 22B may have plate holes 27, exposing the positive and negative terminals 21 P, 21 N of cells 21. Lead plates 23 can be inserted through plate holes 27, and connected to the cell terminals by welding or some other process. If a series connection between two cells is desired, it is preferable to provide alternating terminals, i.e., the top terminal of the first cell is positive while the top terminal of the second cell is negative, in order to simplify connection with lead plates 23. Conversely, if a parallel connection between two cells is desired, it is preferable to provide the cells in the same orientation, so that the top terminals of the first and second cells are next to each other.

It is preferable to minimize movements between cells 21 relative to lead plates 23. Accordingly, a rib 22R may have a crush rib 22RR for minimizing the play between the cell 21 and rib 22R, thus limiting the movement of cell 21. Persons skilled in the art will recognize that other methods for minimizing the play between cell 21 and rib 22R may be used, such as using friction fits or springs, etc.

Pads 24 are disposed between cells 21 and supports 22. According to the invention pads 24 are made of absorptive material. Pads 24 may cover part, if not all, of a cell terminal, or a vent hole, of cell 21. By disposing pads 24 accordingly, pads 24 may absorb any electrolyte which may leak from the cell 21. Preferably, pads 24 do not extend beyond the cell terminal, so as to not block holes 22H. Accordingly, pads 24 are preferably circular, and may have a radius substantially equal to or smaller than the radius of cell 21. It is preferable to dispose pads 24 only against vent holes, which may be proximate to positive terminals 21 P, or against positive terminals 21 P.

Supports 22T, 22B may have protrusions 25, 26 extending therefrom. Preferably protrusions 25, 26 extend substantially perpendicular to the supports 22. Protrusions 25, 26 may have respective ends 25E, 26E which engage each other. As shown in FIG. 1, end 25E has a hook portion 25H, which engages a hole 26H in end portion 26E, creating a snap-lock junction. Preferably, the junction will slightly compress or hold tightly cells 21, pads 24, etc. Persons skilled in the art will recognize that other types of junction may be used, including, for example, male-female socket junctions, friction-coupling junctions, etc.

Accordingly, to assemble a packet 20, a support, such as bottom support 22B, is provided. If pads 24 are provided for covering the positive and/or negative terminals, the pads 24 are disposed on support 22B in the appropriate pattern. Cells 21 are then disposed thereon in the desired pattern. More pads 24 may be disposed on cells 21. The other support, i.e., top support 22T, is disposed on cells 21 and/or pads 24. Both supports 22T, 22B are pushed towards each other, preferably obtaining the snap-lock junction between protrusions 25, 26. Lead plates 23 are then inserted through plate holes 27 (and through pad hole 24H, if necessary), and connected to the cell terminals.

Alternatively, a lead plate 23 can be connected to a cell 21. A pad 24 may then be disposed on cell 21. This assembly can then be installed in one of the supports 22T, 22B, where the lead plate 23 extends through plate hole 27. The lead plate 23 can then be connected to another cell 21. The other of the supports 22T, 22B is then disposed on the cells 21. Lead plates 23 are then connected accordingly.

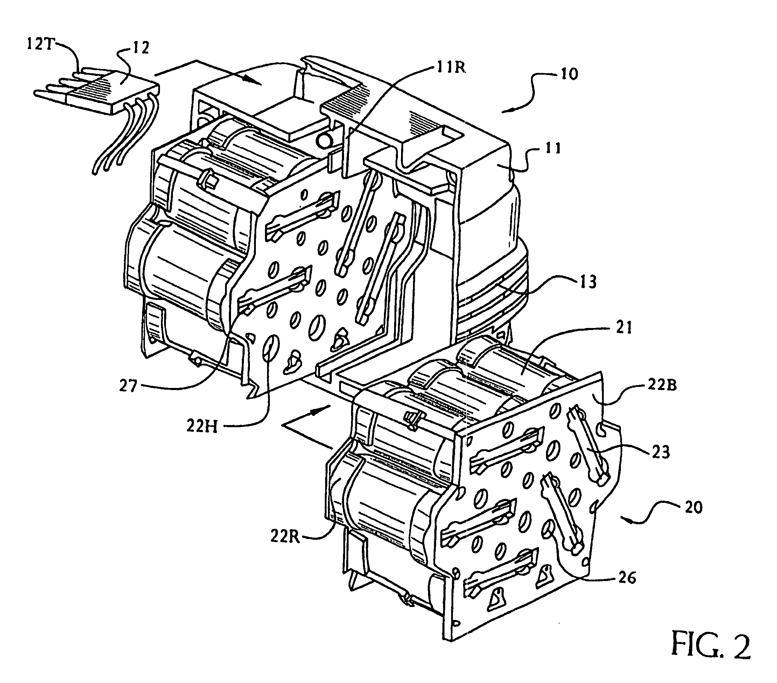

As shown in FIG. 2, the packet 20 can then be inserted into battery pack housing 11. Preferably, housing 11 has ribs 11R to guide insertion of packet 20 into housing 11 and/or to maintain packet 20 in place. Persons skilled in the art will recognize that FIG. 2 shows a clamshell housing 11, which includes two halves, and that one of the halves is not shown. Nevertheless, persons skilled in the art will know to provide the second half, and to fixedly attach both halves together via screws, snap-lock junctions, glue, etc.

The packet 20 is preferably connected to terminal block 12, which is also disposed in housing 11. Terminal block 12 may have multiple terminals 12T, which may correspond to terminals POS, NEG, ID and/or TEMP. If multiple packets 20 are installed within housing 11, the packets 20 need to be electrically connected to each other via wires, lead plates, pressure connectors, etc., and/or to terminal block 12.

Referring to FIGS. 2-3, supports 22T, 22B may also have holes 22H, which allow a fluid, either liquid or gaseous, such as air, to flow therethrough. As mentioned above, ribs 22R are preferably used to maintain cells 21 separated. The fluid can thus flow into packet 20 through a support 22 via holes 22H, between cells 21, and out of packet 20 via holes 22H on the other support 22. Persons skilled in the art are referred to US Application No. 09/035,586, filed March 5, 1998, entitled "Battery Cooling System".

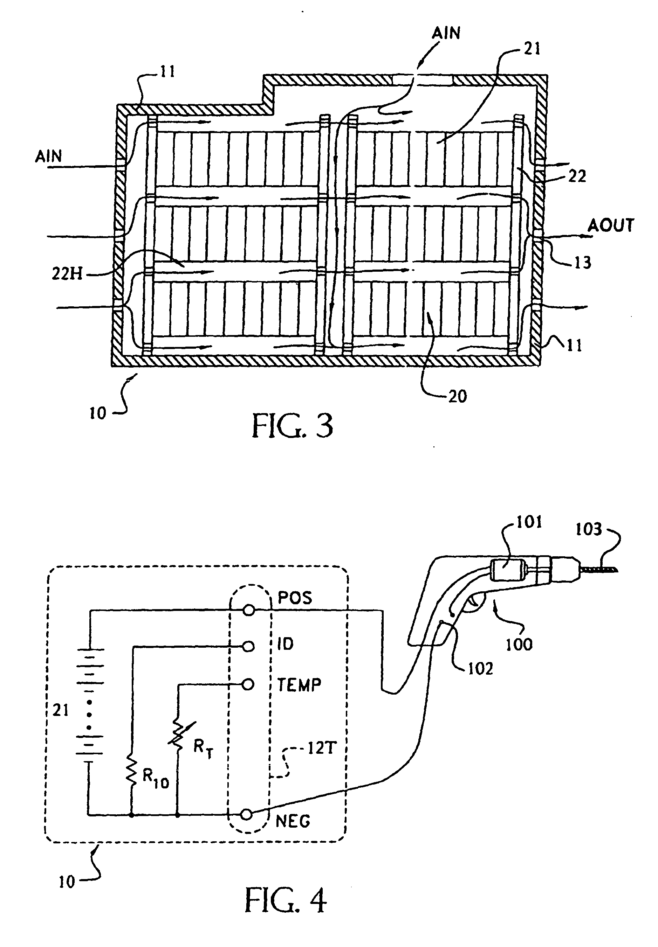

It is preferable to use air as a cooling fluid. Accordingly, housing 11 is provided with holes 13, for letting air into housing 11 (airflow AIN), which flows through packets 20 as explained above, and out of housing 11 (airflow AOUT), as shown in FIG. 3. Alternatively, the air may enter through the top of battery pack 10 and exit through holes 13.

Persons skilled in the art may recognize other alternatives to the means disclosed herein. However, all these additions and/or alterations are considered to be equivalents of the present invention.

## Claims

1. A battery pack (10) comprising:
a first cell (21) having top and bottom terminals;
a first support (22T) disposed on the top terminal; and
a second support (22B) disposed on the bottom terminal, **characterised in that** the battery pack further comprises an absorptive pad (24) for absorbing electrolyte disposed on at least one of the top and bottom terminals.

2. The battery pack of Claim 1, wherein at least one of the first and second supports further comprises a rib (22R) for maintaining the first cell in place.

3. The battery pack of Claim 2, wherein said rib extends along a longitudinal axis of the first cell.

4. The battery pack of Claim 2, wherein the rib extends substantially perpendicularly from the at least one of the first and second supports.

5. The battery pack of any one of the preceding claims, wherein a longitudinal axis of the first cell is substantially perpendicular to at least one of the first and second supports.

6. The battery pack of any one of the preceding claims, wherein the first and second supports lock together.

7. The battery pack of any one of the preceding claims, wherein the first support comprises a first protrusion (25), and the second support comprises a second protrusion (26) which engages the first protrusion.

8. The battery pack of any one of the preceding claims, wherein said pad is substantially circular.

9. The battery pack of any one of the preceding claims, wherein a radius of said pad is substantially equal to or smaller than a radius of said first cell.

10. The battery pack of any one of the preceding claims, further comprising a second cell disposed between the first and second supports.

11. The battery pack of Claim 10, wherein the second cell is disposed adjacent to the first cell.

12. The battery pack of Claim 10, wherein the second cell is separated from the first cell.

13. The battery pack of any one of claims 10 to 12, further comprising a lead plate (23) connecting the first and second cells.

14. The battery pack of Claim 13, wherein the lead plate connects the first and second cells through one of the first and second supports.

15. The battery pack of any one of the preceding claims, wherein at least one of the first and second supports have a hole (22H) for allowing a fluid to flow therethrough.

16. The battery pack of Claim 15, wherein the fluid is air.

17. The battery pack of any one of the preceding claims, further comprising a housing (11) supporting the first cell and the first and second supports.

18. The battery pack of Claim 17, further comprising a second cell having top and bottom terminals;
a third support disposed on the top terminal of the second cell; and
a fourth support disposed on the bottom terminal of the second cell,
said second cell and third and fourth supports being disposed within the housing.

19. The battery pack of Claim 17, further comprising first and second battery terminals connected to the first cell.

20. The battery pack of Claim 17, wherein the housing comprises at least one hole (13) for allowing a fluid to flow therethrough.

21. The battery pack of Claim 20, wherein the fluid is air.

22. A method for manufacturing a battery pack (10), comprising:
providing first (22T) and second (22B) supports and first and second cells (21), the first and second cells having top and bottom terminals; and
disposing the first and second cells between the first and second supports, each top and bottom terminals of the first and second cells contacting one of the first and second supports, **characterised in that** the method further comprises the step of providing an absorptive pad (24) for absorbing electrolyte between one of the top and bottom terminals of the first cell and one of the first and second supports

23. The method of Claim 22, further comprising connecting the first and second cells with a lead plate (23).

24. The method of Claim 23, wherein the lead plate connects the first and second cells through one of the first and second supports.

25. The method of any one of claims 22 to 24, further comprising locking the first and second supports together.

26. The method of any one of claims 22 to 25, further comprising inserting the first and second supports and first and second cells into a housing (11).

27. The method of Claim 26, further comprising:
providing third and fourth supports and third and fourth cells, the third and fourth cells having top and bottom terminals;
disposing the third and fourth cells between the third and fourth supports, each top and bottom terminals of the third and fourth cells contacting one of the third and fourth supports; and
disposing the third and fourth cells and the third and fourth supports into the housing.

28. The method of Claim 26, further comprising:
providing first and second battery terminals; and
electrically connecting the first and second battery terminals to the first and second cells.

## Patentansprüche

1. Batterieeinheit (10) mit
einer Ober- und Unterkontakte aufweisenden ersten Zelle (21),
einer auf dem Oberkontakt angeordneten ersten Abstützung (22T) und
einer auf dem Unterkontakt angeordneten zweiten Abstützung (22B), **dadurch gekennzeichnet, dass** die Batterieeinheit ferner ein absorbierendes Kissen (24) zum Absorbieren von Elektrolyt aufweist, das an zumindest einem von dem Ober- oder dem Unterkontakt angeordnet ist.

2. Batterieeinheit nach Anspruch 1, bei der zumindest eine von den ersten und zweiten Abstützungen ferner eine Rippe (22R) zum Haltern der ersten Zelle an ihrer Stelle aufweist.

3. Batterieeinheit nach Anspruch 2, bei der sich die Rippe entlang einer Längsachse der ersten Zelle erstreckt.

4. Batterieeinheit nach Anspruch 2, bei der die Rippe sich im Wesentlichen senkrecht von zumindest einer der ersten und zweiten Abstützungen erstreckt.

5. Batterieeinheit nach einem der vorhergehenden Ansprüche, bei der sich eine Längsachse der ersten Zelle im Wesentlichen senkrecht zu zumindest einer der ersten und zweiten Abstützungen erstreckt.

6. Batterieeinheit nach einem der vorhergehenden Ansprüche, wobei die erste und die zweite Abstützung sich miteinander verriegeln.

7. Batterieeinheit nach einem der vorhergehenden Ansprüche, wobei die erste Abstützung einen ersten Vorsprung (25) aufweist und die zweite Abstützung einen zweiten Vorsprung (26), der mit dem ersten Vorsprung in Eingriff kommt.

8. Batterieeinheit nach einem der vorhergehenden Ansprüche, bei der das Kissen im Wesentlichen kreisförmig ist.

9. Batterieeinheit nach einem der vorhergehenden Ansprüche, bei der ein Radius des Kissens im Wesentlichen gleich oder kleiner als der Radius der ersten Zelle ist.

10. Batterieeinheit nach einem der vorhergehenden Ansprüche, ferner aufweisend eine zwischen den ersten und zweiten Abstützungen vorgesehene zweite Zelle.

11. Batterieeinheit nach Anspruch 10, bei der die zweite Zelle benachbart zur ersten Zelle angeordnet ist.

12. Batterieeinheit nach Anspruch 10, bei der die zweite Zelle von der ersten Zelle getrennt ist.

13. Batterieeinheit nach einem der Ansprüche 10 bis 12, ferner aufweisend eine die ersten und zweiten Zellen verbindende Leiterplatte (23).

14. Batterieeinheit nach Anspruch 13, bei der die Leiterplatte die ersten und zweiten Zellen durch eine der ersten und zweiten Abstützungen verbindet.

15. Batterieeinheit nach einem der vorhergehenden Ansprüche, bei der zumindest eine der ersten und zweiten Abstützungen ein Loch (22H) zum Durchtritt von Fluid aufweist.

16. Batterieeinheit nach Anspruch 15, bei der das Fluid Luft ist.

17. Batterieeinheit nach einem der vorhergehenden Ansprüche, ferner aufweisend ein die erste Zelle und die ersten und zweiten Abstützungen halterndes Gehäuse (11).

18. Batterieeinheit nach Anspruch 17, ferner aufweisend eine zweite Zelle mit Ober- und Unterkontakten,
eine auf dem Oberkontakt der zweiten Zelle vorgesehene dritte Abstützung und
eine auf dem Unterkontakt der zweiten Zelle vorgesehene vierte Abstützung,
wobei sich die zweite Zelle und die dritten und vierten Abstützungen im Gehäuse befinden.

19. Batterieeinheit nach Anspruch 17, ferner aufweisend mit der ersten Zelle verbundene erste und zweite Batteriekontakte.

20. Batterieeinheit nach Anspruch 17, bei der das Gehäuse mindestens ein Loch (13) für den Durchtritt von Fluid aufweist.

21. Batterieeinheit nach Anspruch 20, bei der das Fluid Luft ist.

22. Verfahren zum Herstellen einer Batterieeinheit (10) umfassend:
Zurverfügungstellen von ersten (22T) und zweiten (22B) Abstützungen und ersten und zweiten Zellen (21), wobei die ersten und zweiten Zellen Ober- und Unterkontakte aufweisen,
Anordnen der ersten und zweiten Zellen zwischen den ersten und zweiten Abstützungen, wobei die Ober- und Unterkontakte der ersten und zweiten Zellen eine der te der ersten und zweiten Zellen eine der ersten und zweiten Abstützungen berühren, **dadurch gekennzeichnet, dass** das Verfahren ferner den Schritt des Bereitstellenes eines absorbierenden Kissens (24) zum Absorbieren von Elektrolyt zwischen einem von dem Oberkontakt und dem Unterkontakt der ersten Zelle und von einer aus der ersten und der zweiten Abstützung aufweist.

23. Verfahren nach Anspruch 22, ferner umfassend das Verbinden der ersten und zweiten Zellen mit einer Leiterplatte (23).

24. Verfahren nach Anspruch 23, bei dem die Leiterplatte die ersten und zweiten Zellen durch eine der ersten und zweiten Abstützungen verbindet.

25. Verfahren nach einem der Ansprüche 22 bis 24, ferner ein Verriegeln der ersten und zweiten Abstützungen miteinander umfassend.

26. Verfahren nach einem der Ansprüche 22 bis 25, ferner umfassend ein Einsetzen der ersten und zweiten Abstützungen und der ersten und zweiten Zellen in ein Gehäuse (11).

27. Verfahren nach Anspruch 26, ferner umfassend:
Zurverfügungstellen von dritten und vierten Abstützungen und dritten und vierten Zellen, wobei die dritten und vierten Zellen Ober- und Unterkontakte haben,
Anordnen der ersten und vierten Zellen zwischen den dritten und vierten Abstützungen, wobei jeder der Ober- und Unterkontakte der dritten und vierten Zellen eine der dritten und vierten Abstützungen berührt, und
Anordnen der dritten und vierten Zellen und der dritten und vierten Abstützungen im Gehäuse.

28. Verfahren nach Anspruch 26, ferner umfassend
Zurverfügungstellen von ersten und zweiten Batteriekontakten und
elektrisches Verbinden der ersten und zweiten Batteriekontakte mit den ersten und zweiten Zellen.

## Revendications

1. Module de batterie (10) comprenant :
➢ une première cellule (21) comportant des bornes supérieure et inférieure ;
➢ un premier support (22T) disposé sur la borne supérieure ; et
➢ un deuxième support (22B) disposé sur la borne inférieure, **caractérisé en ce que** le module de batterie comprend en outre un coussinet absorbant (24) destiné à absorber l'électrolyte disposé sur au moins une des bornes supérieure et inférieure.

2. Module de batterie selon la revendication 1, dans lequel au moins un des premier et deuxième supports comprend en outre une nervure (22R) destinée à maintenir la première cellule en place.

3. Module de batterie selon la revendication 2, dans lequel ladite nervure s'étend le long d'un axe longitudinal de la première cellule.

4. Module de batterie selon la revendication 2, dans lequel la nervure s'étend sensiblement de manière perpendiculaire depuis au moins un des premier et deuxième supports.

5. Module de batterie selon l'une quelconque des revendications précédentes, dans lequel un axe longitudinal de la première cellule est sensiblement perpendiculaire à au moins un des premier et deuxième supports.

6. Module de batterie selon l'une quelconque des revendications précédentes, dans lequel les premier et deuxième supports s'emboîtent.

7. Module de batterie selon l'une quelconque des revendications précédentes, dans lequel le premier support comprend une première saillie (25), et le deuxième support comprend une deuxième saillie (26) qui se met en prise avec la première saillie.

8. Module de batterie selon l'une quelconque des revendications précédentes, dans lequel ledit coussinet est sensiblement circulaire.

9. Module de batterie selon l'une quelconque des revendications précédentes, dans lequel un rayon dudit coussinet est sensiblement égal ou inférieur à un rayon de ladite première cellule.

10. Module de batterie selon l'une quelconque des revendications précédentes, comprenant en outre une deuxième cellule disposée entre les premier et deuxième supports.

11. Module de batterie selon la revendication 10, dans lequel la deuxième cellule est disposée de manière adjacente à la première cellule.

12. Module de batterie selon la revendication 10, dans lequel la deuxième cellule est séparée de la première cellule.

13. Module de batterie selon l'une quelconque des revendications 10 à 12, comprenant en outre une plaque de plomb (23) raccordant les première et deuxième cellules.

14. Module de batterie selon la revendication 13, dans lequel la plaque de plomb raccorde les première et deuxième cellules à travers un des premier et deuxième supports.

15. Module de batterie selon l'une quelconque des revendications précédentes, dans lequel au moins un des premier et deuxième supports comporte un orifice (22H) destiné à permettre à un fluide de s'écouler à travers celui-ci.

16. Module de batterie selon la revendication 15, dans lequel le fluide est de l'air.

17. Module de batterie selon l'une quelconque des revendications précédentes, comprenant en outre un boîtier (11) supportant la première cellule et les premier et deuxième supports.

18. Module de batterie selon la revendication 17, comprenant en outre une deuxième cellule comportant des bornes supérieure et inférieure ;
un troisième support disposé sur la borne supérieure de la deuxième cellule ; et
un quatrième support disposé sur la borne inférieure de la deuxième cellule,
ladite deuxième cellule et lesdits troisième et quatrième supports étant disposés à l'intérieur du boîtier.

19. Module de batterie selon la revendication 17, comprenant en outre des première et deuxième bornes de batterie raccordées à la première cellule.

20. Module de batterie selon la revendication 17, dans lequel le boîtier comprend au moins un orifice (13) destiné à permettre à un fluide de s'écouler à travers celui-ci.

21. Module de batterie selon la revendication 20, dans lequel le fluide est de l'air.

22. Procédé de fabrication d'un module de batterie (10), comprenant :
➢ la fourniture de premier (22T) et deuxième (22B) supports et de première et deuxième cellules (21), les première et deuxième cellules comportant des bornes supérieure et inférieure ; et
➢ la disposition des première et deuxième cellules entre les premier et deuxième supports, chacune des bornes supérieure et inférieure des première et deuxième cellules se trouvant en contact avec un des premier et deuxième supports, **caractérisée en ce que** la méthode comprend en outre l'étape de fourniture d'un coussinet absorbant (24) destiné à absorber l'électrolyte entre une des bornes supérieure et inférieure de la première cellule et un des premier et deuxième supports.

23. Procédé selon la revendication 22, comprenant en outre le raccordement des première et deuxième cellules avec une plaque de plomb (23).

24. Procédé selon la revendication 23, dans lequel la plaque de plomb raccorde les première et deuxième cellules à travers un des premier et deuxième supports.

25. Procédé selon l'une quelconque des revendications 22 à 24, comprenant en outre l'emboîtement des premier et deuxième supports.

26. Procédé selon l'une quelconque des revendications 22 à 25, comprenant en outre l'insertion des premier et deuxième supports et des première et deuxième cellules dans un boîtier (11).

27. Procédé selon la revendication 26, comprenant :
➢ la fourniture de troisième et quatrième supports et de troisième et quatrième cellules, les troisième et quatrième cellules comportant des bornes supérieure et inférieure ;
➢ la disposition des troisième et quatrième cellules entre les troisième et quatrième supports, chacune des bornes supérieure et inférieure des troisième et quatrième cellules se trouvant en contact avec un des troisième et quatrième supports ; et
➢ la disposition des troisième et quatrième cellules et des troisième et quatrième supports à l'intérieur du boîtier.

28. Procédé selon la revendication 26, comprenant en outre :
➢ la fourniture de première et deuxième bornes de batterie et
➢ le raccordement électrique des première et deuxième bornes de batterie aux première et deuxième cellules.
